# EUROPEAN PATENT SPECIFICATION

(11) **EP 3 035 733 B1**
(45) Date of publication and mention of the grant of the patent: **16.08.2017**
(21) Application number: 14307049.8
(22) Date of filing: 16.12.2014
(51) Int. Cl.: H04W 28/08

(54) **A method for mobile data offloading, a management centre, a related access point and related mobile communications device**
Verfahren für mobile Datenentladung, Verwaltungscenter, entsprechender Zugangspunkt und entsprechende mobile Kommunikationsvorrichtung
Procédé de déchargement de données mobiles, centre de gestion, point d'accès associé et dispositif de communication mobile associé

(43) Date of publication of application: 22.06.2016
(73) Proprietor: ALCATEL LUCENT, 92100 Boulogne-Billancourt (FR)
(72) Inventor: Gacanin, Haris, 2018 Antwerpen (BE)
(74) Representative: ALU Antw Patent Attorneys

(56) References cited:
- WO-A1-2013/171365
- US-A1- 2014 043 966

## Description

### FIELD OF THE INVENTION

The present invention relates to the field of wireless data communication and, more particularly but not exclusively to data offload of a mobile communications device between 3GPP and non- 3GPP networks.

### TECHNICAL BACKGROUND OF THE INVENTION

Currently, connecting to public Wi-Fi is often a cumbersome and inconsistent process. Users typically have to search on their devices for a network, enable a connection to that network and enter account credentials by launching a web browser. Some of this process has been automated as part of some mobile device operating systems, or embedded in third-party connection manager applications, but the experience is far from seamless or hidden from the user. The automation of the process as it happens today can also lead directly to a degraded user experience. Many mobile devices on the market automatically select a known Wi-Fi network as soon as it comes into range.

The classic example is when a mobile device enters a building with both Wi-Fi and 3G/4G coverage: even if the Wi-Fi coverage is poor and the 3G coverage is good, the device may still select the Wi-Fi network. such device-based access selection can lead to a significant degradation in data rate provided to the user, unless and until the user moves closer to the Wi-Fi access point. In addition, there is always a risk that the Wi-Fi network being joined is not what it claims to be or offers poor security, or that the user would actually get a better signal and data rate by staying connected to the mobile cellular data network.

Currently, 3GPP networks respectively amongst others including femtocells, 3G and 4G networks and non 3GPP networks amongst others including WLANs are widely deployed for indoor/outdoor internet access (residential and enterprise). Currently, we are experiencing indoor as well as outdoor WiFi and femtocell coverage. These networks may belong to the same or different operators: public or private (enterprise for example). An example of the prior art can be found in US2014/043966. A problem thereof is how to enable efficient network statistics across different home networks (e.g. Wi-Fi network and femto cell network) for decision making functions. In most of the cases managed Access Points may not be visible to each other and thus, the relationships among them are not provided at the management centre managing these access points. This is typically the case in multi-vendor femto/Wi-Fi network deployments (i.e. different vendors have different algorithms that are not compatible). Hence this raises a problem of lacking an efficient and seamless 3GPP - non-3GPP, e.g. WiFi-Femto, offload.

Currently, there are two approaches endeavouring to solve this problem. A first approach is the utilization of ANDSF for non-3GPP access. Access network discovery and selection function (ANDSF) is an entity within an evolved packet core of the system architecture evolution for 3GPP compliant mobile networks. The purpose of the ANDSF is to assist user equipment such as a mobile communications device to discover non-3GPP access networks - such as Wi-Fi or WIMAX - that can be used for data communications in addition to 3GPP access networks (such as HSPA or LTE) and to provide the user equipment, e.g. a mobile communications device, with rules policing the connection to these networks.

Hence, this function allows non 3GPP users such as Wi-Fi connected users to be moved to a 3GPP (e.g. Femto, Macro) network. However, this approach has the shortcoming that many mobile phone vendors do not support ANDSF. For example is Apple does not support ANDSF as well as a number of android phones manufacturers do not support ANDSF.

A second approach is via IEEE 802.11u (IEEE 802.1 1-2007) standard which adds features that improve interworking with external networks. Mobile users, whose devices can move between 3G and Wi-Fi networks at a low level using 802.21 handoff, also need a unified and reliable way to authorize their access to all of those networks. 802.11 u provides a common abstraction that all networks regardless of protocol can use to provide a common authentication experience. However, this approach as well suffers from the device vendors and implementation of these protocols.

### SUMMARY OF THE INVENTION

An objective of the present invention is to provide with a method, a system and related devices for providing data offload of a mobile communications device between 3GPP and non 3GPP networks but wherein the aforementioned shortcoming or drawbacks of the known solutions are alleviated or overcome.

Accordingly, embodiments of the present invention relate to a method for data offloading of a mobile communications device between an access point of a 3GPP network and an access point of a non 3GPP network, where either an access point of said 3GPP network or an access point of said non-3GPP access point provides said mobile communications device with internet access, said data offloading being under control of a management centre, being coupled to each access point of said 3GPP network, and being coupled to each access point of said non-3GPP network and being coupled to said at least one mobile device, wherein said method comprises the steps of:
- collecting access point performance parameters corresponding to at least one access point of said 3GPP networks and corresponding to at least one access point of said non-3GPP networks by at least one mobile device; and
- said at least one mobile device communicating said access point performance parameters corresponding to said 3GPP access points and corresponding to said non 3GPP access points to said management center; and
- said management centre generating an access point overview based on said access point performance parameters corresponding to said 3GPP access points and corresponding to said and non 3GPP access points; and
- generating a management action based on said access point overview.

Another embodiment of the method of the present invention relates to the method for offloading data of a mobile device according to claim 1 wherein said at least one access point performance parameter is a visibility metric.

Still further an embodiment of the present invention relates to a method for offloading data of a mobile device according to claim 1, wherein said access point overview may comprise at least one of:
- A visibility link metric;
- an estimation of a load of each access point.

Another embodiment of the method of the present invention relates to a method for offloading data of a mobile device according to claim 1, wherein said management action includes at least one of:
- advice at least one mobile device to offload data between an access point of a 3GPP network and an access point of a non 3GPP network;
- reconfigure said mobile device;
- reconfigure a 3GPP access point by changing the reference signal transmit power level;
- reconfigure a non-3GPP access point transmit signal power.

Still another embodiment of the method of the present invention relates to a method for offloading data of a mobile device according to claim 4, wherein said method further comprises the step of executing said management action.

Another embodiment of the method of the present invention relates to a system configured to mobile data offloading of a mobile device between an access point of a 3GPP access network included in said system and an access point of a non 3GPP access network included in said system, where either an access point of said 3GPP network or an access point of said non-3GPP access point provides said mobile device with internet access, said system further comprising a management center for controlling said mobile data offloading, said management center being coupled to each access point of said 3GPP network, to each access point of said non-3GPP network and being coupled to said at least one mobile device, wherein said system further being configured to:
- collect at least one access point performance parameter corresponding to at least one access point of said 3GPP networks and corresponding to at least one access point of said non-3GPP networks by at least one mobile device; and
- communicate said at least one access point performance parameter corresponding to said 3GPP access points and corresponding to said non 3GPP access points from said mobile communications device (MD) to said management center; and
- generate an access point overview based on said at least one access point performance parameters corresponding to said 3GPP access points and corresponding to said and non 3GPP access points; and
- generate a management action based on said access point overview.

Another embodiment of the method of the present invention relates to a Management Centre (MC) for controlling mobile data offloading of a mobile device between an access point (FAP1, FAP2) of a 3GPP access network and an access point of a non 3GPP access network, where either an access point (FAP1, FAP2) of said 3GPP network or an access point (WAP1, WAP2) of said non-3GPP access point provides said mobile device with internet access, said management center (MC) being coupled to each access point (FAP1, FAP2) of said 3GPP network aid management center (MC)being coupled to each access point (WAP1, WAP2) of said non-3GPP network and being coupled to said at least one mobile device (MD), wherein said Management Centre (MC) further being configured to:
- receive at least one access point performance parameter corresponding to said 3GPP access points and corresponding to said non 3GPP access points from said mobile communications device (MD); and
- generate an access point overview based on said at least one access point performance parameters corresponding to said 3GPP access points and corresponding to said and non 3GPP access points (WAP1, WAP2); and
- generate a management action based on said access point overview.

Still another embodiment of the method of the present invention relates to a Management Centre (MC) according to claim 7, wherein said at least one access point performance parameter is a visibility metric.

Still a further embodiment of the method of the present invention relates to a Management Centre (MC) according to claim 7, wherein said network connection overview/summary may comprise at least one of:
-. a visibility link metric;
-. an estimation of a load of each access point (FAP1, FAP2, WAP1, WAP2).

Another embodiment of the method of the present invention relates to a Management Centre (MC) according to claim 7, wherein said management action includes at least one of:
- advice at least one mobile device to offload data between an access point of a 3GPP network and an access point of a non 3GPP network;
- reconfigure said mobile device;
- reconfigure a 3GPP access point by changing the reference signal transmit power level;
- reconfigure a non-3GPP access point transmit signal power.

Another embodiment of the method of the present invention relates to a Mobile communications device (MCD) configured to support mobile data offloading of said mobile device between an access point (FAP1, FAP2) of a 3GPP access network and an access point of a non-3GPP access network, where either an access point (FAP1, FAP2) of said 3GPP network or an access point (WAP1, WAP2) of said non-3GPP access point provides said mobile device (MD) with internet access, said system further comprising a management center (MC) for controlling said mobile data offloading, said mobile communications device (MD) being coupled to said management centre (MC), wherein said mobile communications device further is configured to:
- collect access point performance parameters corresponding to at least one access point of said 3GPP networks and corresponding to at least one access point of said non-3GPP networks; and
- communicate said access point performance parameters corresponding to said 3GPP access points and corresponding to said non 3GPP access points to said management center (MC).

In this way, by a mobile communications device, collecting at least one access point performance parameter corresponding to at least one access point of said 3GPP network and additionally collecting at least one access point performance parameter corresponding to at least one access point of said non-3GPP networks and subsequently exchanging between the mobile communications device and a management centre the access point performance parameters corresponding to said 3GPP access points and corresponding to said non 3GPP access points whereafter the management centre generates an access point overview based on said collected access point performance parameters corresponding to said 3GPP access points and said collected access point performance parameters corresponding to said and non 3GPP access points and the management centre generating a management action based on said access point overview where the management action causes an improved data offloading of the mobile communications device.

Based on the access point overview, the processing means generates a management action, which management action may be, based on the collected parameters from the mobile communications device MD (or a number of them) the Management Centre MC will re-initiate the mobile device re-configuration according to current and estimated load of detected non-3GPP access network , e.g. Wifi or 3GPP access network, such as Femto Access points, so that the mobile communications devices switches from the 3GPP access network towards the non-3GPP access network or the other way around.

Alternatively the management centre MC may additionally or alternatively instruct to reconfigure a 3GPP access point by changing the reference signal transmit power level or to reconfigure a non-3GPP access point transmit signal power.

Now based on the additional information, as determined and collected by the mobile device, which information provides an improved view on the lay-out of the existing network and corresponding access points, optionally together with additional load information on each of the respective access points, the management centre is better enabled to based on the additional information to take decisions to improve the mobile data offload of the mobile communication device by generating a corresponding management action.

This information, which is collected by the mobile communications device, is complementary to the limited network information as is available from the various access points under supervision of the management center, as this network information only includes information that is perceivable by each of the respective access points. Due to the fact access point are out of range of other access points, such first access point is not perceivable by a second access point and hence no information on such first access point can be collected by the second access point.

Such access point performance parameters corresponding to at least one access point of said 3GPP networks and additionally corresponding to at least one access point of said non-3GPP networks may include for each access point: the number of users connected to an access point, the downlink Physical Resource Block (PRB) usage, transmit power level, load per cell or per Access Point. Such mobile communications devices do posses their own connection managers that constantly scan the operating spectrum of both the 3GPP access points as well as the non-3GPP access points.

The view of the mobile communications device MD is much broader and hence is able to provide information not only from its own but even on a large number of neighbouring networks and corresponding access points.

This is contrary to the conventional management solution, where the management centre is limited by the information provided by the Access Points controller's proprietary or partially implemented TR-069 interface.

The access point overview may be or include an overview of the available access points in the neighborhood of the mobile communications device, i.e. an overview on both 3GPP access points as the non-3GPP access points together with the respective load on each of those access points.

The access point overview may additionally or alternatively consist of, or include a visibility link metric that gives an overview of each visible link, i.e. each link that is visible for the mobile communications device, the information on the SSID and corresponding RSSI that belongs to each such link. The mobile communications device further may report both WIFI and FEMTO-cell neighbouring statistics, neighbour list, signal levels and/or cell identification for inclusion in such access point overview.

The access point overview may alternatively or additionally include or be an estimation of a load of each access point.

It is to be noted that Wi-Fi controllers (as used in carrier Wi-Fi based deployments) are not required in embodiments of the present invention. Embodiments of the present invention do not include or depend on the use of Wi-Fi controllers.

Moreover, it is to be noted that the present invention only covers indoor (an limited outdoor TR-069 manageable) small cells and is not covering macro (eNBs) network deployments because it will be very broad in that case and that does not cover indoor/home/enterprise deployments).

Further, such a generated management action may include an action of the management centre that based on the earlier generated access point overview is taken or to be taken. Such a management action may act upon the mobile communications device but in the alternative or in addition to, also act upon each of the access points, i.e. act upon the 3GPP access points as well as act upon the non-3GPP access points. Such management action taken in order to improve the mobile data offload of the mobile communication device between a 3GPP access network and a non-3GPP access network, may
include at least one of:
- advising at least one mobile device to data offload between an access point of a 3GPP network and an access point of a non 3GPP network, i.e. advise to switch between an access point of a 3GPP network and an access point of a non 3GPP network;
- reconfigure said mobile communications device to data offload between an access point of a 3GPP network and an access point of a non 3GPP network; i.e. Reconfigure a mobile communications device to factually change the data access interface from cellular (mobile) to WiFi or other way around or in other words,: the management Centre triggers the mobile communications device configuration manager to change the operating data interface from cellular (mobile) to Wi-Fi or other way around.
   - reconfigure a 3GPP access point by changing the reference signal transmit power level.
   - reconfigure a non-3GPP access point by adapting the transmit signal power.

It is to be noted that Wi-Fi controllers (as used in carrier Wi-Fi based deployments) are not required in embodiments of the present invention. Embodiments of the present invention do not include or depend on the use of Wi-Fi controllers.

Moreover, it is to be noted that the present invention only covers indoor (an limited outdoor TR-069 manageable) small cells and is not covering macro (eNBs) network deployments because it will be very broad in that case and that does not cover indoor/home/enterprise deployments).

Another embodiment of the present invention is that said method additionally comprises the step of executing said management action wherein the mobile communications device factually based on the advice of the management centre or based on the management action received from the management centre to change the from the 3GPP data interface to the non-3GPP data interface or the other way around. Alternatively based on the received management action the respective access points do reconfigure the access point by changing the reference signal transmit power level or in case of a non-3GPP access point by adapting the transmit signal power.

Further characterizing embodiments of the present method for are mentioned in the appended claims.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for controlling mobile data offloading of a mobile device between a 3GPP access point FAP1, FAP2 and anon-3GPP access point WAP1, WAP2 according to an embodiment of the present invention; and
Fig. 2 represents the functional structure of a of a management center MC according to an embodiment of the present invention; and
Fig. 3 represents the functional structure of a mobile communications device MD according to an embodiment of the present invention; and
Fig. 4 represents a network configuration according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

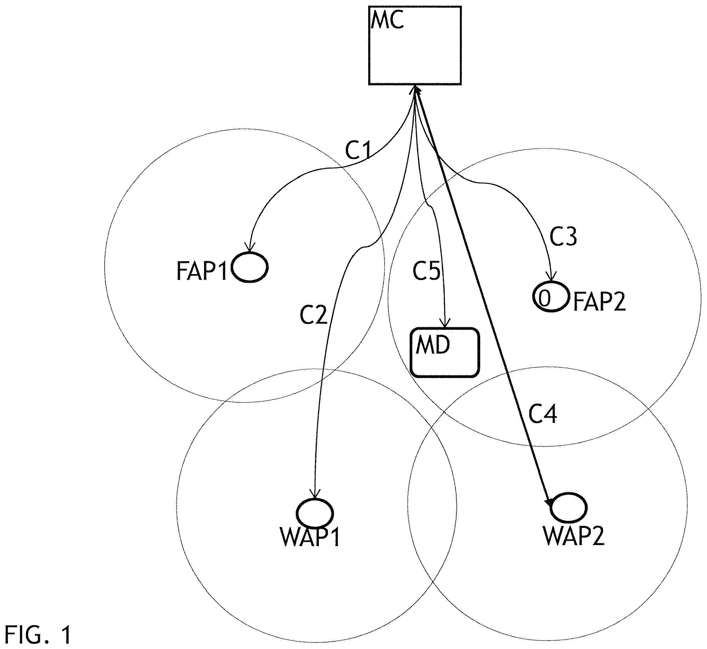

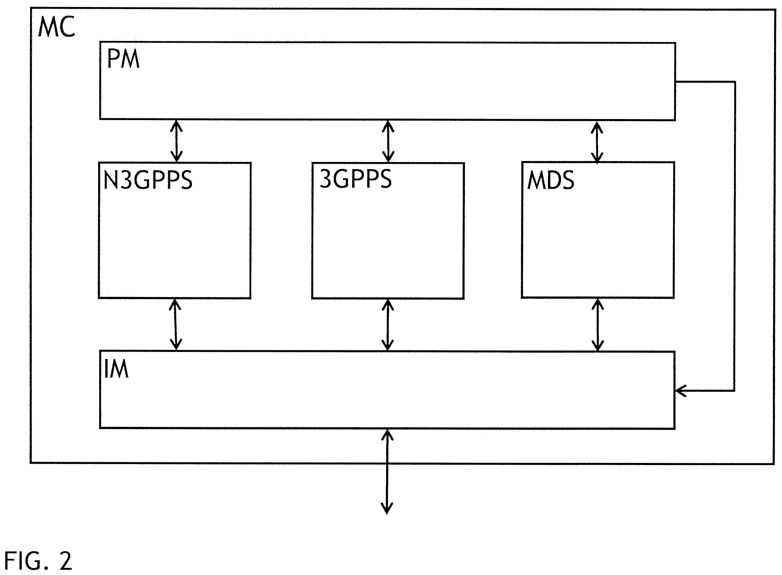

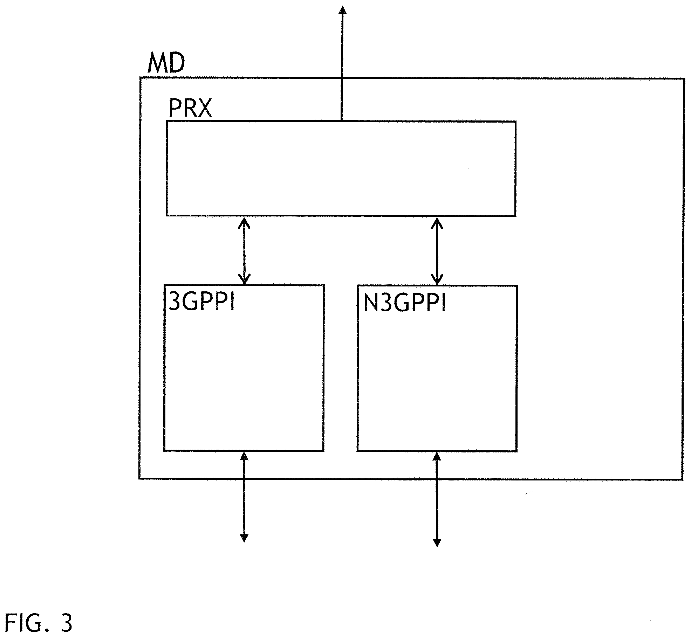

In the following paragraphs, referring to the drawing in FIG.1, an implementation of a system for data offloading of a mobile device between an access point of a 3GPP network and an access point of a non 3GPP network, according to an embodiment of the present invention is described. In the second paragraph, all connections between mentioned elements are defined. Subsequently all relevant functional means of the management centre MC as presented in FIG.2 are described and the all relevant functional means of the mobile communications device MD as presented in FIG.3 are described followed by a description of all interconnections.

In the succeeding paragraph the actual execution of the system is described.

A first essential element of the system is a management centre MC being a management network element that is implemented at a computer located at operator site that is configured to control said mobile data offloading typically being a network element under control of a network operator.

Further there is a plurality of access points FAP1, FAP2 of a 3GPP access network and an additionally a plurality of access point WAP1, WAP2 of a non 3GPP access network for provides a mobile communications device with internet access.

Such an access point of a 3GPP access network may be implemented by a Femto cell access point, an HSPA network access point, a LTE network access points.

Such a 3GPP access point FAP1, FAP2 of the 3GPP network comprises a TR-069/196 management protocol client supporting the communication with the management centre MC.

Furthermore, such an access point of a non 3GPP access network may be implemented by means of a Wi-Fi router or WIMAX access point

Such a 3GPP access point FAP1, FAP2 of the 3GPP network comprises a TR-069/181 management protocol client supporting the communication with the management centre MC.

Finally there is at least one mobile communications device MD for supporting the mobile data offloading between an access point FAP1, FAP2 of a 3GPP access network and an access point of a non 3GPP access network, where either an access point FAP1, FAP2 of said 3GPP network or an access point WAP1, WAP2 of said non-3GPP access point provides said mobile device with internet access. Such mobile communications device typically is a mobile phone such as, but not limited to, a smart-phone with a non-3GPP data interface, e.g. a Wi-Fi interface and additionally a 3GPP data interface, e.g. 2G, 3G, 4G, HSPA LTE or equivalent interface or alternatively such a mobile communications device MD may be any customer premises equipment CPE having a 3GPP communications interface together with a non 3GPP communications interface.

The management center MC typically is coupled to each access point FAP1, FAP2 of the 3GPP network by means of a TR-069/1 96 management protocol client. The management center MC is coupled to the management protocol client of the 3GPP access point over an IP connection, respectively C1, C3.Furthermore, the Management center MC typically is coupled to each access point WAP1, WAP2 of said non-3GPP network by means of a TR-069/1 81 management protocol client. The management center MC is coupled to the management protocol client of the non-3GPP access points WAP1, WAP2 over an IP connection, respectively C2, C4

Finally, the mobile communications device MD is coupled to the management centre MC by means of an OMA/DM OMA/CP management protocol client. The management center MC is coupled to the management protocol client of the mobile communications device over a mobile IP connection C5.

A first essential means of the Management Centre MC is the interfacing means IM that is configured to receive management information, amongst others the at least one access point performance parameter corresponding to said 3GPP access points and corresponding to said non 3GPP access points from said mobile communications device and additionally configured to send management information amongst others including management actions directed to either one or more of the mobile communications device and the access points of the respective 3GPP network or the non-3GPP network.

Additionally, the management centre MC further comprises a first management database N3GPPS being a database, for instance being implemented as a certain storage, like a hard disk, comprising information on the non 3GPP access points as collected and stored by the management center MC. The first management database N3GPPS stores for each access point, the corresponding service Set Identifier SSID and the Reference Signal Strength indicator RSSI.

Additionally, the management centre MC further comprises a second management database 3GPPS being a database, being implemented as a certain storage like a hard disk comprising information on the 3GPP access points as collected and stored by the management center MC. The second management database 3GPPS stores for each access point, the corresponding service Set Identifier SSID and the Reference Signal Strength indicator RSSI.

Furthermore, the management centre MC further comprises a third management database MDS being a database, being implemented as a certain storage like a hard disk comprising information corresponding to the 3GPP access points and corresponding to the non 3GPP access points as collected and stored by the mobile communications device. The third management database MDS further or alternatively may store a visibility link metric being a metric indicating the visibility of each access point FAP1, FAP2, WAP1, WAP2 to each respective other access point FAP1, FAP2, WAP1, WAP2, with respect to sensed reference signal strength indicator, optionally in combination with an estimation of a load of each access point FAP1, FAP2, WAP1, WAP2.

It is to be noted that although this embodiment discloses only one mobile communications device for reasons of simplicity, it could be the case that the same kind of information is collected for each mobile communications device of a plurality of communications devices.

Further, the management center comprises a processing means that is configured to generate an access point overview based on said at least one access performance parameters corresponding to said 3GPP access points point FAP1, FAP2 and the at least one access point performance parameters corresponding to said and non 3GPP access points WAP1, WAP2.

The processing means PM further is configured to generate a management action based on said access point overview.

Finally, the processing means is configured to instruct the interfacing means IM to forward the determined management action via the interfacing means IM towards the destination being at least one of the mobile communication device and/or one of the respective access points FAP1, FAP2, WAP1, WAP2 of either the 3GPP access network or the non-3GPP access network. The management action received by the destination and executed results in the supporting of or factual mobile data offloading by the mobile communications device MD.

A first essential means of the Mobile communications device MD is the 3GPP interface 3GPPI that is configured to collect access point performance parameters corresponding to at least one access point of said 3GPP access networks and the non-3GPP interface N3GPPI that is configured to collect access point performance parameters corresponding to at least one access point of the non 3GPP access networks. The mobile communications device MD further comprises a proxy PRX hat is configured to communicate the access point performance parameters corresponding to the 3GPP access points and additionally or alternatively corresponding to the non 3GPP access points to the said management center MC.

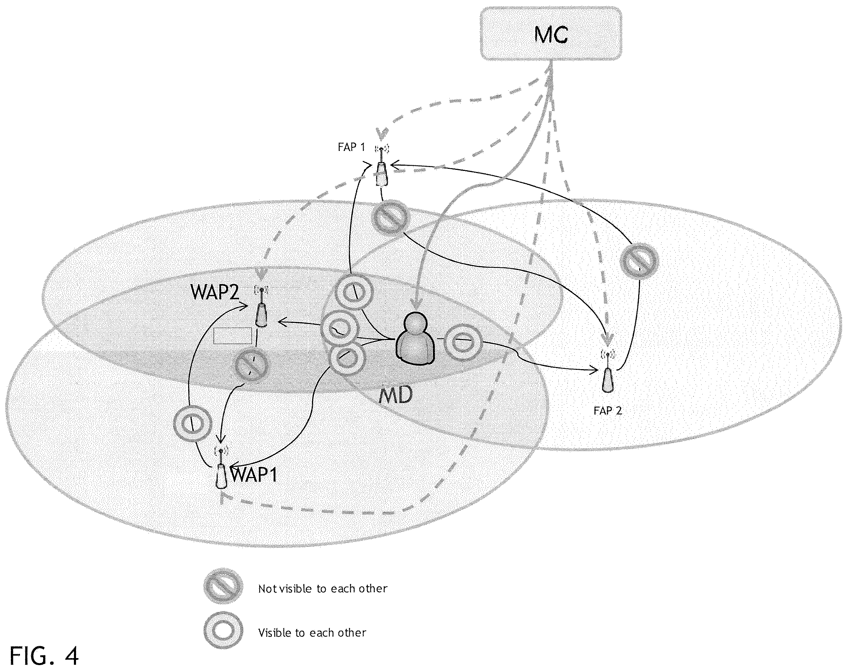

In order to explain the present invention first it is assumed that there is a network configuration as depicted in FIG. 4.

In the current situation the management centre MC communicates with each of the current access points FAP1, FAP2, via the respective corresponding management protocol client of the access points, in order to collect for each access point the corresponding SSIDs and RSSIs, the load information for each femto cell (e.g., number of connected users, downlink PRB usage, etc.).

Moreover, in the current situation the management centre MC communicates with each of the current access points WAP1, WAP2, via the respective corresponding management protocol client of the access points, in order to collect for each access point the corresponding SSIDs and RSSIs, the load information for each Wi-Fi cell (e.g., number of connected users, downlink PRB usage, etc.).

As illustrated in FIG 4 some of the Access Points cannot see each other. I.e. access points FAP1 is not visible to FAP2 and the other way around FAP1 is not visible by the access point FAP2. Hence both access point FAP1, FAP2 are not able to report on the existence and on possibly to be measured characteristics on access point FAP1, FAP2 to the management centre MC as the information is not available.

Furthermore, the access points WAP1 is not visible to WAP2 but the other way around WAP1 is visible by the access point WAP2. Hence access point WAP2 is able to report on the existence and on measured characteristics on access point WAP1 to the management centre MC. The other way around, access point WAP1 does not have any information on the access point WAP2 as this access point is not visible to the access point WAP1 and hence only access point WAP2 reports the SSIDs and RSSIs, the load information for each WiFi cell (e.g., number of connected users, downlink PRB usage, etc.) to the management centre MC.

The network visibility from operator's Management Centre MC perspective is limited to management capabilities of each of the access points.

In an embodiment of the present invention being advantageous over the before described current situation, the management centre MC has access to customer premises equipment and user terminals such as for example but not limited to, a mobile communications device MD. We assume that both mobile 3GPP and wireless interfaces non 3GPP are enabled on the smart phone. The embodiment of the present invention is described with the following procedure:
- The mobile communications device MD (mobile) having its own connection managers, i.e. respectively the 3GPP interface 3GPPI, configured to collect access point performance parameters on at least one access point of said 3GPP access networks and the non-3GPP interface N3GPPI that are constantly scanning the operating spectrum. Both interfaces do collect the access point performance parameters on the access points FAP1, FAP2 of the 3GPP networks (Femto cells network) and on the access points WAP1, WAP2 of the non-3GPP networks (WiFI networks). The proxy PRX of the mobile communications device MD communicates the access point performance parameters on the 3GPP access points FAP1, FAP2 and on the non 3GPP access points WAP1, WAP2 to the management center MC. Each of the current access points FAP1, FAP2, WAP1, WAP2 are visible to the mobile communications device MD and corresponding access point performance parameters, such as Wiff: SSID, RSSIs and femto: reference signal power level, reference signal quality level, serving cell ID and location, neighbor lists and their reference signal levels, related to each of the access points are collected.

The interfacing means IM of the management center MC receives the access point performance parameters corresponding to the 3GPP access points FAP1, FAP2 and the access point performance parameters corresponding to the non-3GPP access points WAP1, WAP 2 from the proxy PRX of the mobile communications device MD. The received information first is stored in the third management database MDS. Subsequently, or at the same time, the processing means PM of the management center MC generate an access point overview based on the access point performance parameters on the 3GPP access points FAP1, FAP2 and on said non 3GPP access points WAP1, WAP 2. The generated access point overview may include the visibility link metric between (or for) each visible link (SSID and corresponding RSSI) from the mobile communications device(s) MD on all interfaces.

Additionally or alternatively, the the access point performance parameters on the 3GPP access points FAP1, FAP2 and on said non 3GPP access points WAP1, WAP 2. Include reported respective WiFi and Femto cell neighbouring statistics.

Based on the access point overview, the processing means generates a management action, which management action may be, based on the collected parameters from the mobile communications device MD (or a number of them) the Management Centre MC will re-initiate the mobile device re-configuration according to current and estimated load of detected Wi-Fi or femto Access points.

Alternatively the management center MC may additionally or alternatively instruct to reconfigure a 3GPP access point by changing the reference signal transmit power level or to reconfigure a non-3GPP access point transmit signal power.

Moreover, this approach may be more robust in the case when a larger number of managed mobile communications devices MD are available. Note that these managed UEs such as mobile communications device MD do not have to be in the same household since GPS information is also available on almost all of the current smart phones and their location (distance) may be estimated.

The management centre MC derives the visibility link metric between (or for) each visible link (SSID and corresponding RSSI) from UE(s) on all interfaces. The device reports both Wi-Fi and femto neighbouring statistics. Based on the collected parameters from a mobile communications device MD (or a plurality thereof) the management centre MC will re-initiate the mobile device re-configuration according to current and estimated load of detected wifi or femto APs.

It is to be noted that Wi-Fi controllers (as used in carrier wifi based deployments) are not required in embodiments of the present invention. Embodiments of the present invention do not include or depend on the use of Wi-Fi controllers.

Moreover, it is to be noted that the present invention only covers (indoor and outdoor manageable) small cells and is not covering macro (eNBs) network deployments because it will be very broad in that case and that does not cover indoor/home/enterprise deployments).

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for mobile data offloading of a mobile device between an access point of a 3GPP network and an access point of a non 3GPP network, where either an access point (FAP1, FAP2) of said 3GPP network or an access point (WAP1, WAP2) of said non-3GPP access point provides said mobile device with internet access, said mobile data offloading being under control of a management centre (MC), being coupled to each access point (FAP1, FAP2) of said 3GPP network, to each access point (WAP1, WAP2) of said non-3GPP network and being coupled to said at least one mobile device, **characterized in that** said method comprises the steps of:
- collecting at least one access point performance parameter corresponding to at least one access point of said 3GPP networks and corresponding to at least one access point of said non-3GPP networks by at least one mobile device; and
- said at least one mobile device communicating said at least one access point performance parameter corresponding to said 3GPP access points and corresponding to said non 3GPP access points to said management center (MC); and
- said management centre (MC) generating an access point overview based on said at least one access point performance parameter corresponding to said 3GPP access points (FAP1, FAP2) and corresponding to said and non 3GPP access points (WAP1, WAP2); and
- generating a management action based on said access point overview.

2. A method for offloading data of a mobile device according to claim 1, **characterized in that** said at least one access point performance parameter is a visibility metric.

3. A method for offloading data of a mobile device according to claim 1, **characterized in that** said access point overview may comprise at least one of:
- a visibility link metric;
- an estimation of a load of each access point (FAP1, FAP2, WAP1, WAP2).

4. A method for offloading data of a mobile device according to claim 1, **characterized in that** said management action includes at least one of:
- advice at least one mobile device to offload data between an access point of a 3GPP network and an access point of a non 3GPP network;
- reconfigure said mobile device;
- reconfigure a 3GPP access point by changing the reference signal transmit power level;
- reconfigure a non-3GPP access point transmit signal power.

5. A method for offloading data of a mobile device according to claim 4, **characterized in that** said method further comprises the step of executing said management action.

6. A system configured to mobile data offloading of a mobile device between an access point (FAP1, FAP2) of a 3GPP access network included in said system and an access point of a non 3GPP access network included in said system, where either an access point (FAP1, FAP2) of said 3GPP network or an access point (WAP1, WAP2) of said non-3GPP access point provides said mobile device with internet access, said system further comprising a management center (MC) for controlling said mobile data offloading, said management center (MC) being coupled to each access point (FAP1, FAP2) of said 3GPP network, to each access point (WAP1, WAP2) of said non-3GPP network and being coupled to said at least one mobile device, **characterized in that** said system further being configured to:
- collect at least one access point performance parameter corresponding to at least one access point of said 3GPP networks and corresponding to at least one access point of said non-3GPP networks by at least one mobile device; and
- communicate said at least one access point performance parameter corresponding to said 3GPP access points and corresponding to said non 3GPP access points from said mobile communications device (MD) to said management center (MC); and
- generate an access point overview based on said at least one access point performance parameters corresponding to said 3GPP access points and corresponding to said and non 3GPP access points (WAP1, WAP2); and
- generate a management action based on said access point overview.

7. Management Centre (MC) for controlling mobile data offloading of a mobile device between an access point (FAP1, FAP2) of a 3GPP access network and an access point of a non 3GPP access network, where either an access point (FAP1, FAP2) of said 3GPP network or an access point (WAP1, WAP2) of said non-3GPP access point provides said mobile device with internet access, said management center (MC) being coupled to each access point (FAP1, FAP2) of said 3GPP network aid management center (MC)being coupled to each access point (WAP1, WAP2) of said non-3GPP network and being coupled to said at least one mobile device (MD), **characterized in that** Management Centre (MC) further being configured to:
- receive at least one access point performance parameter corresponding to said 3GPP access points and corresponding to said non 3GPP access points from said mobile communications device (MD); and
- generate an access point overview based on said at least one access point performance parameters corresponding to said 3GPP access points and corresponding to said and non 3GPP access points (WAP1, WAP2); and
- generate a management action based on said access point overview.

8. Management Centre (MC) according to claim 7, **characterized in that** wherein said at least one access point performance parameter is a visibility metric.

9. Management Centre (MC) according to claim 7, **characterized in that** said network connection overview/summary may comprise at least one of:
-. a visibility link metric;
-. an estimation of a load of each access point (FAP1, FAP2, WAP1, WAP2).

10. Management Centre (MC) according to claim 7, **characterized in that** said management action includes at least one of:
- advice at least one mobile device to offload data between an access point of a 3GPP network and an access point of a non 3GPP network;
- reconfigure said mobile device;
- reconfigure a 3GPP access point by changing the reference signal transmit power level;
- reconfigure a non-3GPP access point transmit signal power.

11. Mobile communications device (MCD) configured to support mobile data offloading of said mobile device between an access point (FAP1, FAP2) of a 3GPP access network and an access point of a non-3GPP access network, where either an access point (FAP1, FAP2) of said 3GPP network or an access point (WAP1, WAP2) of said non-3GPP access point provides said mobile device (MD) with internet access, said system further comprising a management center (MC) for controlling said mobile data offloading, said mobile communications device (MD) being coupled to said management centre (MC), **characterized in that** said mobile communications device further is configured to:
- collect access point performance parameters corresponding to at least one access point of said 3GPP networks and corresponding to at least one access point of said non-3GPP networks; and
- communicate said access point performance parameters corresponding to said 3GPP access points and corresponding to said non 3GPP access points to said management center (MC).

## Patentansprüche

1. Verfahren für mobile Datenentladung eines mobilen Geräts zwischen einem Zugangspunkt eines 3GPP-Netzwerks und einem Zugangspunkt eines Nicht-3GPP-Netzwerks, wobei entweder ein Zugangspunkt (FAP1, FAP2) des besagten 3GPP-Netzwerks oder ein Zugangspunkt (WAP1, WAP2) des besagten Nicht-3GPP-Zugangspunkts das besagte mobile Gerät mit einem Internetzugang ausstattet, wobei die besagte mobile Datenentladung unter der Kontrolle eines Verwaltungszentrums (MC) erfolgt, das an jeden Zugangspunkt (FAP1, FAP2) des besagten 3GPP-Netzwerks, an jeden Zugangspunkt (WAP1, WAP2) des besagten Nicht-3GPP-Netzwerks und an das besagte mindestens eine mobile Gerät gekoppelt ist, **dadurch gekennzeichnet, dass** das besagte Verfahren folgende Schritte umfasst:
- Erfassen von mindestens einem Zugangspunkt-Leistungsparameter, der mindestens einem Zugangspunkt des besagten 3GPP-Netzwerks entspricht und der mindestens einem Zugangspunkt des besagten Nicht-3GPP-Netzwerks entspricht, durch das mindestens eine mobile Gerät; und
- Mitteilen des besagten mindestens einen Zugangspunkt-Leistungsparameters, der den besagten 3GPP-Zugangspunkten entspricht und der den besagten Nicht-3GPP-Zugangspunkten entspricht, durch das mindestens eine mobile Gerät an das besagte Verwaltungszentrum (MC); und
- Erzeugen einer Zugangspunktübersicht basierend auf dem besagten mindestens einen Zugangspunkt-Leistungsparameter, der den besagten 3GPP-Zugangspunkten (FAP1, FAP2) entspricht und der den besagten Nicht-3GPP-Zugangspunkten (WAP1, WAP2) entspricht, durch das besagte Verwaltungszentrum (MC); und
- Erzeugen einer Verwaltungsaktion basierend auf der besagten Zugangspunktübersicht.

2. Verfahren für Datenentladung eines mobilen Geräts nach Anspruch 1, **dadurch gekennzeichnet, dass** der besagte mindestens eine Zugangspunkt-Leistungsparameter eine Sichtbarkeitsmetrik ist.

3. Verfahren für Datenentladung eines mobilen Geräts nach Anspruch 1, **dadurch gekennzeichnet, dass** die besagte Zugangspunktübersicht mindestens eines aus Folgendem umfassen kann:
- eine Sichtbarkeitsverbindungsmetrik;
- eine Schätzung einer Ladung jedes Zugangspunkts (FAP1, FAP2, WAP1, WAP2).

4. Verfahren für Datenentladung eines mobilen Geräts nach Anspruch 1, **dadurch gekennzeichnet, dass** die besagte Verwaltungsaktion mindestens eines aus Folgendem umfasst:
- Empfehlung an mindestens ein mobiles Gerät, Daten zwischen einem Zugangspunkt eines 3GPP-Netzwerks und einem Zugangspunkt eines Nicht-3GPP-Netzwerks zu entladen;
- Neukonfiguration des besagten mobilen Geräts;
- Neukonfiguration eines 3GPP-Zugangspunkts durch Ändern des Referenzsignal-Sendeleistungspegels;
- Neukonfiguration einer Sendesignalleistung eines Nicht-3GPP-Zugangspunkts.

5. Verfahren für Datenentladung eines mobilen Geräts nach Anspruch 4, **dadurch gekennzeichnet, dass** das besagte Verfahren weiterhin den Schritt des Ausführens der besagten Verwaltungsaktion umfasst.

6. System, das konfiguriert ist für mobile Datenentladung eines mobilen Geräts zwischen einem Zugangspunkt (FAP1, FAP2) eines 3GPP-Zugangsnetzwerks, das in dem besagten System integriert ist, und einem Zugangspunkt eines Nicht-3GPP-Zugangsnetzwerks, das in dem besagten System integriert ist, wobei entweder ein Zugangspunkt (FAP1, FAP2) des besagten 3GPP-Netzwerks oder ein Zugangspunkt (WAP1, WAP2) des besagten Nicht-3GPP-Zugangspunkts das besagte mobile Gerät mit einem Internetzugang ausstattet, wobei das besagte System weiterhin ein Verwaltungszentrum (MC) zum Kontrollieren der besagten mobilen Datenentladung umfasst, wobei das besagte Verwaltungszentrum (MC) an jeden Zugangspunkt (FAP1, FAP2) des besagten 3GPP-Netzwerks, an jeden Zugangspunkt (WAP1, WAP2) des besagten Nicht-3GPP-Netzwerks und an das besagte mindestens eine mobile Gerät gekoppelt ist, **dadurch gekennzeichnet, dass** das besagte System weiterhin konfiguriert ist zum:
- Erfassen von mindestens einem Zugangspunkt-Leistungsparameter, der mindestens einem Zugangspunkt des besagten 3GPP-Netzwerks entspricht und der mindestens einem Zugangspunkt des besagten Nicht-3GPP-Netzwerks entspricht, durch das mindestens eine mobile Gerät; und
- Mitteilen des besagten mindestens einen Zugangspunkt-Leistungsparameters, der den besagten 3GPP-Zugangspunkten entspricht und der den besagten Nicht-3GPP-Zugangspunkten entspricht, durch das besagte mobile Kommunikationsgerät (MD) an das besagte Verwaltungszentrum (MC); und
- Erzeugen einer Zugangspunktübersicht basierend auf dem besagten mindestens einen Zugangspunkt-Leistungsparameter, der den besagten 3GPP-Zugangspunkten entspricht und der den besagten Nicht-3GPP-Zuagngspunkten (WAP1, WAP2) entspricht; und
- Erzeugen einer Verwaltungsaktion basierend auf der besagten Zugangspunktübersicht.

7. Verwaltungszentrum (MC) zum Kontrollieren der mobilen Datenentladung eines mobilen Geräts zwischen einem Zugangspunkt (FAP1, FAP2) eines 3GPP-Zugangsnetzwerks und einem Zugangspunkt eines Nicht-3GPP-Zugangsnetzwerks, wobei entweder ein Zugangspunkt (FAP1, FAP2) des besagten 3GPP-Netzwerks oder ein Zugangspunkt (WAP1, WAP2) des besagten Nicht-3GPP-Zugangspunkts das besagte mobile Gerät mit einem Internetzugang ausstattet, wobei das besagte Verwaltungszentrum (MC) an jeden Zugangspunkt (FAP1, FAP2) des besagten 3GPP-Netzwerks gekoppelt ist, wobei das besagte Verwaltungszentrum (MC) an jeden Zugangspunkt (WAP1, WAP2) des besagten Nicht-3GPP-Netzwerks und an das besagte mindestens eine mobile Gerät (MD) gekoppelt ist, **dadurch gekennzeichnet, dass** das Verwaltungszentrum (MC) weiterhin konfiguriert ist zum:
- Empfangen von mindestens einem Zugangspunkt-Leistungsparameter, der den besagten 3GPP-Zugangspunkten entspricht und der den besagten Nicht-3GPP-Zugangspunkten entspricht, von dem besagten mobilen Kommunikationsgerät (MD); und
- Erzeugen einer Zugangspunktübersicht basierend auf dem besagten mindestens einen Zugangspunkt-Leistungsparameter, der den besagten 3GPP-Zugangspunkten entspricht und der den besagten Nicht-3GPP-Zuagngspunkten (WAP1, WAP2) entspricht; und
- Erzeugen einer Verwaltungsaktion basierend auf der besagten Zugangspunktübersicht.

8. Verwaltungszentrum (MC) nach Anspruch 7, **dadurch gekennzeichnet, dass** der besagte mindestens eine Zugangspunkt-Leistungsparameter eine Sichtbarkeitsmetrik ist.

9. Verwaltungszentrum (MC) nach Anspruch 7, **dadurch gekennzeichnet, dass** die besagte Netzwerkverbindungsübersicht/-zusammenfassung mindestens eines aus Folgendem umfassen kann:
- eine Sichtbarkeitsverbindungsmetrik;
- eine Schätzung einer Ladung jedes Zugangspunkts (FAP1, FAP2, WAP1, WAP2).

10. Verwaltungszentrum (MC) nach Anspruch 7, **dadurch gekennzeichnet, dass** die besagte Verwaltungsaktion mindestens eines aus Folgendem umfasst:
- Empfehlung an mindestens ein mobiles Gerät, Daten zwischen einem Zugangspunkt eines 3GPP-Netzwerks und einem Zugangspunkt eines Nicht-3GPP-Netzwerks zu entladen;
- Neukonfiguration des besagten mobilen Geräts;
- Neukonfiguration eines 3GPP-Zugangspunkts durch Ändern des Referenzsignal-Sendeleistungspegels;
- Neukonfiguration einer Sendesignalleistung eines Nicht-3GPP-Zugangspunkts.

11. Mobiles Kommunikationsgerät (MCD), das konfiguriert ist zur Unterstützung mobiler Datenentladung des besagten mobilen Geräts zwischen einem Zugangspunkt (FAP1, FAP2) eines 3GPP-Zugangsnetzwerks und einem Zugangspunkt eines Nicht-3GPP-Zugangsnetzwerks, wobei entweder ein Zugangspunkt (FAP1, FAP2) des besagten 3GPP-Netzwerks oder ein Zugangspunkt (WAP1, WAP2) des besagten Nicht-3GPP-Zugangspunkts das besagte mobile Gerät (MD) mit einem Internetzugang ausstattet, wobei das besagte System weiterhin ein Verwaltungszentrum (MC) zum Kontrollieren der besagten mobilen Datenentladung umfasst, wobei das besagte mobile Kommunikationsgerät (MD) an das besagte Verwaltungszentrum (MC) gekoppelt ist, **dadurch gekennzeichnet, dass** das besagte mobile Kommunikationsgerät weiterhin konfiguriert ist zum:
- Erfassen von Zugangspunkt-Leistungsparametern, die mindestens einem Zugangspunkt des besagten 3GPP-Netzwerks entsprechen und die mindestens einem Zugangspunkt des besagten Nicht-3GPP-Netzwerks entsprechen; und
- Mitteilen der besagten Zugangspunkt-Leistungsparameter, die den besagten 3GPP-Zugangspunkten entsprechen und die den besagten Nicht-3GPP-Zugangspunkten entsprechen, an das besagte Verwaltungszentrum (MC).

## Revendications

1. Procédé de déchargement de données mobiles d'un dispositif mobile entre un point d'accès d'un réseau 3GPP et un point d'accès d'un réseau non 3GPP, où un point d'accès (FAP1, FAP2) dudit réseau 3GPP ou un point d'accès (WAP1, WAP2) dudit point d'accès non-3GPP fournit un accès Internet audit dispositif mobile, ledit déchargement de données mobiles étant sous le contrôle d'un centre de gestion (MC), étant couplé à chaque point d'accès (FAP1, FAP2) dudit réseau 3GPP, à chaque point d'accès (WAP1, WAP2) dudit réseau non-3GPP et étant couplé audit au moins un dispositif mobile, **caractérisé en ce que** ledit procédé comprend les étapes suivantes :
- collecter au moins un paramètre de performance de point d'accès correspondant à au moins un point d'accès desdits réseaux 3GPP et correspondant à au moins un point d'accès desdits réseaux non-3GPP au moyen d'au moins un dispositif mobile ; et
- ledit au moins un dispositif mobile communiquant ledit au moins un paramètre de performance de point d'accès, correspondant auxdits points d'accès 3GPP et correspondant auxdits points d'accès non 3GPP, audit centre de gestion (MC) ; et
- ledit centre de gestion (MC) générant une vue globale des points d'accès sur la base dudit au moins un paramètre de performance de point d'accès correspondant auxdits points d'accès 3GPP (FAP1, FAP2) et correspondant auxdits points d'accès non 3GPP (WAP1, WAP2) ; et
- générer une action de gestion sur la base de ladite vue globale des points d'accès.

2. Procédé de déchargement de données d'un dispositif mobile selon la revendication 1, **caractérisé en ce que** ledit au moins un paramètre de performance de point d'accès est une mesure de la visibilité.

3. Procédé de déchargement de données d'un dispositif mobile selon la revendication 1, **caractérisé en ce que** ladite vue globale des points d'accès peut comprendre au moins un des éléments suivants :
- une mesure du lien de visibilité ;
- une estimation d'une charge de chaque point d'accès (FAP1, FAP2, WAP1, WAP2).

4. Procédé de déchargement de données d'un dispositif mobile selon la revendication 1, **caractérisé en ce que** ladite action de gestion comprend au moins une des actions suivantes :
- conseiller à au moins un dispositif mobile de décharger des données entre un point d'accès d'un réseau 3GPP et un point d'accès d'un réseau non 3GPP ;
- reconfigurer ledit dispositif mobile ;
- reconfigurer un point d'accès 3GPP en changeant le niveau de puissance de transmission du signal de référence ;
- reconfigurer une puissance de signal de transmission du point d'accès non-3GPP.

5. Procédé de déchargement de données d'un dispositif mobile selon la revendication 4, **caractérisé en ce que** ledit procédé comprend en outre l'étape d'exécution de ladite action de gestion.

6. Système configuré pour le déchargement de données mobiles d'un dispositif mobile entre un point d'accès (FAP1, FAP2) d'un réseau d'accès 3GPP inclus dans ledit système et un point d'accès d'un réseau d'accès non 3GPP inclus dans ledit système, où un point d'accès (FAP1, FAP2) dudit réseau 3GPP ou un point d'accès (WAP1, WAP2) dudit point d'accès non-3GPP fournit un accès Internet audit dispositif mobile, ledit système comprenant en outre un centre de gestion (MC) pour contrôler ledit déchargement de données mobiles, ledit centre de gestion (MC) étant couplé à chaque point d'accès (FAP1, FAP2) dudit réseau 3GPP, à chaque point d'accès (WAP1, WAP2) dudit réseau non-3GPP et étant couplé audit au moins un dispositif mobile, **caractérisé en ce que** ledit système est en outre configuré pour :
- collecter au moins un paramètre de performance de point d'accès correspondant à au moins un point d'accès desdits réseaux 3GPP et correspondant à au moins un point d'accès desdits réseaux non-3GPP au moyen d'au moins un dispositif mobile ; et
- communiquer ledit au moins un paramètre de performance de point d'accès, correspondant auxdits points d'accès 3GPP et correspondant auxdits points d'accès non 3GPP, à partir dudit dispositif de communication mobile (MD) audit centre de gestion (MC); et
- générer une vue globale des points d'accès sur la base dudit au moins un paramètre de performance de point d'accès correspondant auxdits points d'accès 3GPP et correspondant auxdits points d'accès non 3GPP (WAP1, WAP2) ; et
- générer une action de gestion sur la base de ladite vue globale des points d'accès.

7. Centre de gestion (MC) pour contrôler le déchargement de données mobiles d'un dispositif mobile entre un point d'accès (FAP1, FAP2) d'un réseau d'accès 3GPP et un point d'accès d'un réseau d'accès non 3GPP, où un point d'accès (FAP1, FAP2) dudit réseau 3GPP ou un point d'accès (WAP1, WAP2) dudit point d'accès non-3GPP fournit un accès Internet audit dispositif mobile, ledit centre de gestion (MC) étant couplé à chaque point d'accès (FAP1, FAP2) dudit réseau 3GPP, ledit centre de gestion (MC) étant couplé à chaque point d'accès (WAP1, WAP2) dudit réseau non-3GPP et étant couplé audit au moins un dispositif mobile (MD), **caractérisé en ce que** le centre de gestion (MC) est en outre configuré pour :
- recevoir au moins un paramètre de performance de point d'accès correspondant auxdits points d'accès 3GPP et correspondant auxdits points d'accès non 3GPP à partir dudit dispositif de communication mobile (MD) ; et
- générer une vue globale des points d'accès sur la base dudit au moins un paramètre de performance de point d'accès correspondant auxdits points d'accès 3GPP et correspondant auxdits points d'accès non 3GPP (WAP1, WAP2) ; et
- générer une action de gestion sur la base de ladite vue globale des points d'accès.

8. Centre de gestion (MC) selon la revendication 7, **caractérisé en ce que** ledit au moins un paramètre de performance de point d'accès est une mesure de la visibilité.

9. Centre de gestion (MC) selon la revendication 7, **caractérisé en ce que** ladite vue globale/ledit résumé de connexion réseau peut comprendre au moins un des éléments suivants :
- une mesure du lien de visibilité ;
- une estimation d'une charge de chaque point d'accès (FAP1, FAP2, WAP1, WAP2).

10. Centre de gestion (MC) selon la revendication 7, **caractérisé en ce que** ladite action de gestion comprend au moins une des actions suivantes :
- conseiller à au moins un dispositif mobile de décharger des données entre un point d'accès d'un réseau 3GPP et un point d'accès d'un réseau non 3GPP ;
- reconfigurer ledit dispositif mobile ;
- reconfigurer un point d'accès 3GPP en changeant le niveau de puissance de transmission du signal de référence ;
- reconfigurer une puissance de signal de transmission du point d'accès non-3GPP.

11. Dispositif de communication mobile (MCD) configuré pour prendre en charge le déchargement de données mobiles dudit dispositif mobile entre un point d'accès (FAP1, FAP2) d'un réseau d'accès 3GPP et un point d'accès d'un réseau d'accès non-3GPP, où un point d'accès (FAP1, FAP2) dudit réseau 3GPP ou un point d'accès (WAP1, WAP2) dudit point d'accès non-3GPP fournit un accès Internet audit dispositif mobile (MD), ledit système comprenant en outre un centre de gestion (MC) pour contrôler ledit déchargement de données mobiles, ledit dispositif de communication mobile (MD) étant couplé audit centre de gestion (MC), **caractérisé en ce que** ledit dispositif de communication mobile est en outre configuré pour :
- collecter des paramètres de performance de point d'accès correspondant à au moins un point d'accès desdits réseaux 3GPP et correspondant à au moins un point d'accès desdits réseaux non-3GPP ; et
- communiquer lesdits paramètres de performance de point d'accès, correspondant auxdits points d'accès 3GPP et correspondant auxdits points d'accès non 3GPP, audit centre de gestion (MC).
